# EUROPÄISCHE PATENTANMELDUNG

(11) **EP 1 557 078 A1**
(43) Veröffentlichungstag der Anmeldung: **27.07.2005**
(21) Anmeldenummer: 05000777.2
(22) Anmeldetag: 15.01.2005
(51) Int. Cl.: A01C 7/10, A01C 7/08

(54) **Elektronische Vorrichtung zum Zählen kleiner Körperchen**

(30) Priorität: 24.01.2004 DE 102004003702
(71) Anmelder: Amazonen-Werke H. Dreyer GmbH & Co. KG, 49205 Hasbergen (DE)
(72) Erfinder: Dreyer, Justus, Dr., 49078 Osnabrück (DE); Scheufler, Bernd, Dr.-Ing., 49205 Hasbergen (DE)

(57) **Zusammenfassung**

Elektronische Vorrichtung zum Zählen kleiner Körperchen, insbesondere die von einer Sämaschine auszubringenden Saatkörner, bei der die zu zählenden Körperchen in einer pneumatisch beaufschlagten Leitung (9) gefördert und einen mit Sensoren (15) besetzten Messraum (16) innerhalb der Leitung (9) passieren. Um, mit einfachen Mitteln eine quer zur Förderrichtung des Luftstrom ausgerichtete Entzerrung des zu zählenden Körperchenstroms zu erreichen, ist vorgesehen, dass die Leitung (9) zur Ausgestaltung des Messraumes (16) in einer Ebene erweitert ist, wobei der runde Querschnitt unter zumindest annähernder Beibehaltung des Durchmessermaßes in einer Ebene zu einem ovalen Querschnitt verändert ist.

## Beschreibung

Die Erfindung betrifft eine elektronische Vorrichtung zum Zählen kleiner Körperchen gemäß des Oberbegriffes des Patentanspruches 1.

Eine derartige Vorrichtung ist durch den Prospekt Amazone Neuheiten 2003 - 2004 durch die dortige Beschreibung des Körnerzählers zur Aussaatmengenregelung für pneumatische und mechanisch Sämaschinen auf den Seiten 20 und 21 bekannt. Bei dieser abgebildeten pneumatischen Sämaschine ist zumindest einer vom Verteilerkopf abgehenden Saatleitung ein Körnerzähler zugeordnet, dessen Messraum mit Sensoren besetzt ist.

Der Messraum weist hier die Aufgabe zugrunde, mit einfachen Mitteln eine quer zur Förderrichtung des Luftstromes ausgerichtete Entzerrung des zu zählenden Körperchenstroms zu erreichen.

Diese Aufgabe wird erfindungsgemäß durch das kennzeichnende Merkmal des Patentanspruches 1 gelöst. Infolge dieser Maßnahmen wird der zu zählende Körperchenstrom auseinander gezogen, so dass nach Möglichkeit keine Körperchen in Sichtrichtung der Sensoren hintereinander liegen, dass heiß, dass nach Möglichkeit keine Körperchen im Schatten eines anderen Körperchens liegt. Somit wird über einen größeren Ausbringmengenbereich ein fehlerfreies Mess- bzw. Zählergebnis erreicht.

Um die Körperchen in dem entzerrten Bereich zählen zu können, ist vorgesehen, dass die Sensoren im Bereich des größten Querschnittes über die größte Quererstreckung angeordnet sind.

Um auch in dem vergrößerten bzw. veränderten Querschnitt die laminare Strömung in der Leitung beizubehalten, dass heißt dass die Strömung nicht von der Wandung abreißt, ist vorgesehen, dass die Steigung der Innenwände der Leitungserweiterung zur Schaffung des Messraumes zumindest annähernd 1:10 beträgt bzw. die Neigung der Wände zur Mittellinie der Leitung jeweils nicht mehr als etwa 7 Grad beträgt.

In manchen Fällen kann es zur besseren Entzerrung des Körperchenstromes sinnvoll sein, dass die Strömungsrichtung gesehen vor der Stelle der größten Erweiterung der Leitung eine den Luft- und Körperchenstrom in Zwei-Teilströme teilendes Leitelement quer zur Erweiterungsrichtung der Leitung angeordnet ist. Infolge dieser Maßnahme wird der Körperchenstrom zwangsweise durch Aufspaltung in zwei Teilströme entzerrt.

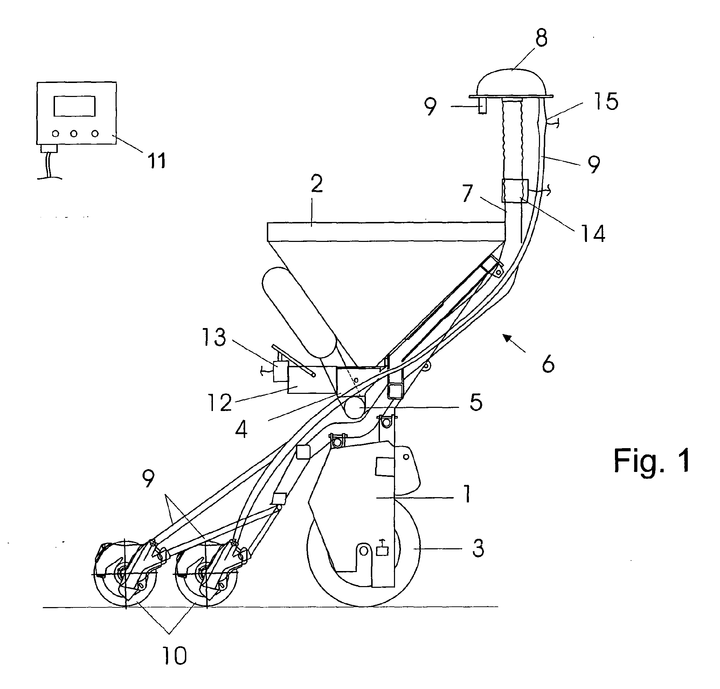

Weitere Einzelheiten sind den übrigen Unteransprüchen der beiden Beispielsbeschreibungen und den Zeichnungen zu entnehmen. Hierbei zeigen
- Fig. 1: die erfindungsgemäß ausgestattete pneumatische Drillmaschine in Prinzipdarstellung und Seitenansicht,

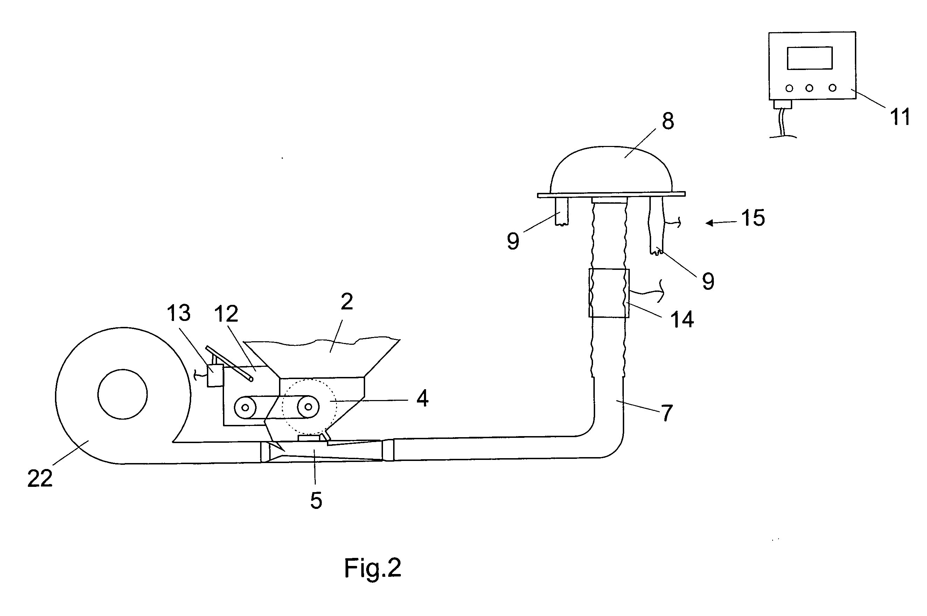

- Fig. 2: die Anordnung der Sensoren in dem Verteilersystem der Sämaschine in vergrößerter Darstellung und in Prinzipdarstellung,
- Fig. 3: die Saatleitung im Bereich der Erweiterung mit der Anordnung des Sensors im Schnitt und in Prinzipdarstellung

- Fig. 4: den Querschnitt der Saatleitung vor der Erweiterung der Saatleitung und der Anordnung des Sensors in der Ansicht IV - IV,
- Fig. 5: den Querschnitt der Saatleitung nach der Erweiterung und der Sensoranordnung in der Ansicht V - V und
- Fig. 6: den Querschnitt der Saatleitung im Bereich der Erweiterung und der Sensoranordnung in der Ansicht VI - VI.

Die Sämaschine ist als pneumatische Verteilmaschine ausgebildet. Sie weist einen Rahmen 1 und Vorratsbehälter 2 auf. Der Rahmen 1 stützt sich auf Laufrädern oder einer Bodenwalze 3 auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die ein Steigrohr 7 aufweist, einleitet. Dieses Steigrohr 7 mündet an seinem oberen Ende in einem Verteilerkopf 8, über den das dosierte Saatgut auf die einzelnen sich an dem Verteilerkopf 8 anschließenden Saatleitungen 9 aufgeteilt wird. Die Saatleitungen 9 führen zu den am Rahmen 1 angelenkten Säschare 10. Dem Laufrad bzw. der Bodenwalze 3 ist eine nicht dargestellte Wegstreckenmesseinrichtung zugeordnet, die Messdaten an eine als Bordcomputer 11 ausgebildete elektronische Auswerteeinheit übermittelt. Der Dosierer 4 wird über einen Antriebsstrang und ein einstellbares Getriebe 12 von einer Kraftquelle 3 angetrieben. Das Getriebe 12 wird über einen Einstellmotor 13 eingestellt und von dem Bordcomputer 11 angesteuert. Es ist auch möglich den Dosierer 4 direkt von einem in seiner Drehzahl regelbaren Antriebsmotor anzutreiben.

Dem Steigrohr 7 ist ein Sensor 14 zur Ermittlung der ausgebrachten Saatkörneranzahl zugeordnet. Ein anderer Sensor 15 ist zumindest einer Saatleitung 9 zugeordnet. Der Sensor 14 für den oberen Messbereich ist im Bereich des Steigrohres 7 und der Sensor 15 für den unteren Messbereich ist zumindest einer der Saatleitungen 9 zugeordnet. Die Sensoren 14, 15 und sind über Übertragungsmittel mit dem Bordcomputer 11 verbunden, so dass die Messdaten der Sensoren 14 und 15 und an den Bordcomputer 11 übermittelt werden. Der Sensor 15 ist als Lichtschranke ausgebildet und der Saatleitung zugeordnet. Die Lichtschranke 15 zählt die einzelnen von dem Verteilerkopf 8 zu den jeweiligen Säscharen 10 gelangende Anzahl Saatkörner. Hierbei wird davon ausgegangen, dass über den Verteilerkopf 8 das durch das Steigrohr 7 zum Verteilerkopf 8 gelangende Saatgut gleichmäßig auf die einzelnen Saatleitungen 9 aufgeteilt wird.

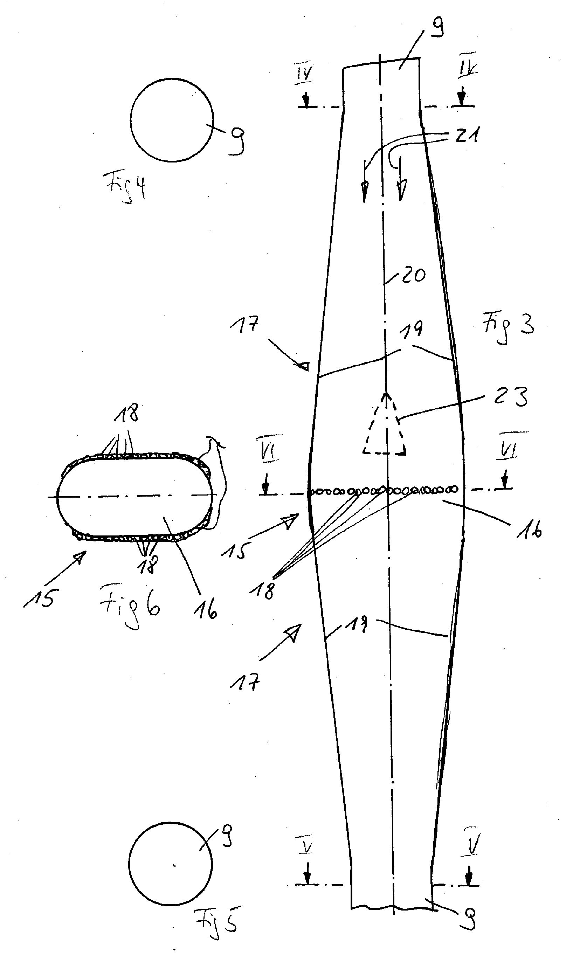

Die Sensoren der Lichtschranke 15 sind in einem Messraum 16 angeordnet. Die Leitung 9 ist zur Ausgestaltung des Messraumes 16 in einer Ebene mittels einer Leistungserweiterung erweitert, wie Fig. 3 und 6 zeigen. Der runde Querschnitt der Leitung 9 ist zur Schaffung des Messraumes 16 unter zumindest annähernder Beibehaltung des Durchmessermaßes in einer Ebene zu einem ovalen Querschnitt verändert, wie dies die Fig. 3 bis 6 zeigen. Die Sensoren 18 der Lichtschranke 15 sind im Bereich des größten Querschnittes über die größte Quererstreckung des Messraumes 16 der Leitung 9 angeordnet, wie Fig. 3 und 6 zeigen. Die Steigung der Innenwände 19 der Leitungserweiterung 17 zur Schaffung des Messraumes 16 beträgt zumindest annähernd 1 : 10 bzw. die Neigung der Wände 19 zur Mittellinie 20 der Leitungserweiterung 17 beträgt jeweils nicht mehr als etwa 7°. Die Ausgestaltung der Steigung der Innenwände 19 der Leitungserweiterung 17 bzw. die Neigung der Wände 19 ist derart gewählt, dass die laminare Strömung innerhalb der Leitungserweiterung 17 nicht von den Wänden 19 abreißt. Das sich in den Leitungen 9 befindliche Saatgut wird in Pfeilrichtung 21 durch den mittels des von dem Gebläse 22 erzeugten Luftstromes gefördert.

Zusätzlich kann, wie mittels der gestrichelten Linien in Fig. 3 angedeutet ist, in Strömungsrichtung 21 gesehen vor der Stelle der größten Erweiterung der Leitung 9 bzw. der Leistungserweiterung 17 einen den Luft- und Körperchenstrom in zwei Teilströme teilendes Leitelement 23 quer zur Erweiterungsrichtung der Leitung 9 angeordnet sein. Hiermit erfolgt ein zwangsweise Auseinanderziehen des Saatgutgemisches, um ein besseres Zählen der sich im Luftstrom befindlichen Saatkörner zu erreichen.

Durch die Erweiterung der Leitung 9 zu den Messraum 16 wird der Saatgutiuftstrom auseinander gezogen, so dass die Wahrscheinlichkeit, das mehrere Körperchen sich hintereinander befinden und somit Fehlzählungen vorkommen können, verringert wird.

## Patentansprüche

1. Elektronische Vorrichtung zum Zählen kleiner Körperchen, insbesondere die von einer Sämaschine auszubringenden Saatkörner, bei der die zu zählenden Körperchen in einer pneumatisch beaufschlagten Leitung (9) gefördert und einen mit Sensoren besetzten Messraum (16) innerhalb der Leitung passieren, **dadurch gekennzeichnet, dass** die Leitung zur Ausgestaltung des Messraumes in einer Ebene erweitert ist, wobei der runde Querschnitt unter zumindest annähernder Beibehaltung des Durchmessermaßes in einer Ebene zu einem ovalen Querschnitt (16) verändert ist.

2. Vorrichtung nach Anspruch 1, **dadurch gekennzeichnet, dass** der runde Querschnitt zu einem ovalen Querschnitt vergrößert ist.

3. Vorrichtung nach Anspruch 1, **dadurch gekennzeichnet, dass** die Sensoren (15, 18) im Bereich des größten Querschnittes über die größte Quererstreckung angeordnet sind.

4. Vorrichtung nach Anspruch 1, **dadurch gekennzeichnet, dass** die Sensoren (15, 18) als Lichtschranke ausgebildet sind.

5. Vorrichtung nach Anspruch 1, **dadurch gekennzeichnet, dass** die Steigung der Innenwände (19) der Leitungserweiterung (17) zur Schaffung des Messraumes (16) zumindest annähernd 1:10 beträgt bzw. die Neigung der Wände (19) zur Mittellinie (20) der Leitung (9, 17) jeweils nicht mehr als etwa 7 Grad beträgt.

6. Vorrichtung nach Anspruch 1, **dadurch gekennzeichnet, dass** in Strömungsrichtung (21) gesehen vor der Stelle der größten Erweiterung der Leitung (9) eine den Luft- und Körperchenstrom in Zwei-Teilströme teilendes Leitelement quer zur Erweiterungsrichtung der Leitung (23) angeordnet ist.
